# EUROPEAN PATENT APPLICATION

(11) **EP 3 978 651 A1**
(43) Date of publication of application: **06.04.2022**
(21) Application number: 20814078.0
(22) Date of filing: 20.04.2020
(51) Int. Cl.: C25B 9/10, C01B 3/02, C25B 9/00, C25B 13/04, H01M 8/00, H01M 8/0656, H01M 8/12

(54) **ELECTROCHEMICAL DEVICE AND HYDROGEN GENERATION METHOD**

(30) Priority: 27.05.2019 JP 2019098700
(71) Applicant: Panasonic Intellectual Property Management Co., Ltd., Osaka-shi, Osaka 540-6207 (JP)
(72) Inventor: MIKAMI, Yuichi, Osaka-shi, Osaka (JP); KUROHA, Tomohiro, Osaka-shi, Osaka (JP); KAKUWA, Takashi, Osaka-shi, Osaka (JP); TERAYAMA, Takeshi, Osaka-shi, Osaka (JP); ONUMA, Shigenori, Osaka-shi, Osaka (JP); NUNOO, Kosuke, Osaka-shi, Osaka (JP); GOTO, Takehito, Osaka-shi, Osaka (JP); KAWADA, Kyohei, Osaka-shi, Osaka (JP)
(74) Representative: Grünecker Patent- und Rechtsanwälte PartG mbB
(86) International application number: PCT/JP2020/016984
(87) International publication number: WO 2020/241115

(57) **Abstract**

The electrochemical apparatus of the present disclosure includes a first stack that includes an oxide ion conductor as an electrolyte and decomposes water vapor to generate hydrogen and oxygen, a second stack that includes a proton conductor as an electrolyte and separates the hydrogen generated in the first stack from a gas mixture of the hydrogen and the water vapor that has not been decomposed in the first stack, and a heat insulation material that covers the first stack and the second stack.

## Description

### Technical Field

The present disclosure relates to an electrochemical apparatus and a hydrogen generation method.

### Background Art

As one method for manufacturing hydrogen using electrolysis, high-temperature steam electrolysis using a solid oxide electrolysis cell (SOEC) is known. The high-temperature steam electrolysis can achieve a high conversion efficiency by using heat energy as the energy necessary for the electrolysis reaction. As the electrolyte of the solid oxide electrolysis cell, an oxide ion conductor, such as yttria-stabilized zirconia, is used.

In high-temperature steam electrolysis, water vapor is supplied to the hydrogen electrode and is decomposed into hydrogen and an oxide ion. The oxide ion conducts through the electrolyte layer, reaches the oxygen electrode, and changes into oxygen at the oxygen electrode. A gas mixture containing the generated hydrogen and the remaining water vapor is discharged from the hydrogen electrode.

Considering the use of hydrogen, it is desirable to increase the purity of the generated hydrogen. PTL 1 describes a power storage system configured such that a gas mixture of hydrogen and water vapor is allowed to pass through a condenser to remove water, and hydrogen is then compressed to be stored in a hydrogen storage tank.

### Citation List

### Patent Literature

PTL 1: Japanese Unexamined Patent Application Publication No. 2010-176939

### Summary of Invention

### Technical Problem

Known systems using high-temperature steam electrolysis have a problem that the energy loss when hydrogen is separated from a gas mixture of hydrogen and water vapor is large.

The present disclosure provides a technique of reducing the energy loss when hydrogen is separated from a gas mixture of hydrogen and water vapor. Solution to Problem
The present disclosure provides an electrochemical apparatus including:
a first stack that includes an oxide ion conductor as an electrolyte and decomposes water vapor to generate hydrogen and oxygen;
a second stack that includes a proton conductor as an electrolyte and separates the hydrogen generated in the first stack from a gas mixture of the hydrogen and the water vapor that has not been decomposed in the first stack; and
a heat insulation material that covers the first stack and the second stack. Advantageous Effects of Invention

According to the technique of the present disclosure, the energy loss when hydrogen is separated from a gas mixture of hydrogen and water vapor can be reduced.

### Brief Description of Drawings

[Fig. 1] Fig. 1 is a configuration diagram of an electrochemical apparatus according to a First Embodiment of the present disclosure.
[Fig. 2] Fig. 2 is a configuration diagram of an electrochemical apparatus according to a Second Embodiment of the present disclosure.
[Fig. 3] Fig. 3 is a configuration diagram of an electrochemical apparatus according to a Third Embodiment of the present disclosure.
[Fig. 4] Fig. 4 is a configuration diagram of an electrochemical apparatus according to a Fourth Embodiment of the present disclosure.
[Fig. 5] Fig. 5 is a configuration diagram of an electrochemical apparatus according to a Fifth Embodiment of the present disclosure.
[Fig. 6] Fig. 6 is a configuration diagram of an electrochemical apparatus according to a Sixth Embodiment of the present disclosure.

### Description of Embodiments

### (Underlying Knowledge Forming Basis of the Present Disclosure)

In the power storage system described in PTL 1, a gas mixture of water vapor and hydrogen is allowed to pass through a condenser to remove water vapor from the gas mixture, and high concentration hydrogen is obtained. When water is condensed and removed, in order to sufficiently decrease the saturated water vapor pressure, it is necessary to sufficiently decrease the temperature of the gas mixture. For example, in order to decrease the water vapor concentration to 1% or less, it is necessary to decrease the gas mixture temperature to be lower than 10°C. A cooling mechanism for cooling the gas mixture and energy for operating this cooling mechanism are indispensable.

As another method for separating hydrogen from a gas mixture, there is a method for obtaining high concentration hydrogen by adsorbing water with an adsorbent, such as zeolite. However, since the capacity of an adsorbent is limited, it is necessary to perform regeneration treatment of the adsorbent on a regular basis. The regeneration treatment of the adsorbent is performed by swinging the pressure and the temperature to remove water from the adsorbent. Energy for operating the mechanism required for the regeneration treatment is necessary.

There is also a method for obtaining high concentration hydrogen with a hydrogen separation membrane that selectively allows hydrogen to pass through. As the hydrogen separation membrane, a palladium membrane is well known. Since a difference in the hydrogen concentration between one side and the other side of the hydrogen separation membrane is the driving forth of the separation, in order to secure a sufficient permeation amount of hydrogen, a mechanism for increasing the difference in the partial hydrogen pressure between one side and the other side of the hydrogen separation membrane is necessary. Alternatively, a sufficiently large area of the hydrogen separation membrane is necessary. The mechanism for increasing the pressure difference requires energy for operating the mechanism. In the hydrogen separation membrane, expensive palladium is used. Accordingly, the hydrogen separation membrane with a large area causes a significant increase in the equipment cost,

In every known method described above, when high concentration hydrogen is obtained by separating hydrogen from a gas mixture, large energy loss occurs. In addition, in every known method, energy is consumed in a form of low-temperature heat energy. The recovery of low-temperature heat energy is not easy. Accordingly, it is also difficult to reduce the energy loss by recovering heat energy.

The present inventors diligently studied techniques for separating hydrogen from a gas mixture. As a result, the present inventors found that high concentration hydrogen can be obtained by using a proton conductor, while reducing the energy loss.

The above finding of the present inventors has not been clarified so far and shows an electrochemical apparatus of a new configuration. The present disclosure specifically provides the following aspects.

### (Outline of aspects according to the present disclosure)

An electrochemical apparatus according to a first aspect of the present disclosure includes:
a first stack that includes an oxide ion conductor as an electrolyte and decomposes water vapor to generate hydrogen and oxygen;
a second stack that includes a proton conductor as an electrolyte and separates the hydrogen generated in the first stack from a gas mixture of the hydrogen and the water vapor that has not been decomposed in the first stack; and
a heat insulation material that covers the first stack and the second stack.

According to the first aspect, the energy loss when hydrogen is separated from a gas mixture of hydrogen and water vapor can be reduced.

In a second aspect of the present disclosure, for example, the electrochemical apparatus according to the first aspect may further include a first path that is connected to the first stack and introduces the water vapor to the first stack, a second path that connects between the first stack and the second stack and introduces the gas mixture from the first stack to the second stack, and a third path in which the hydrogen separated in the second stack flows. According to the second aspect, high concentration hydrogen can be continuously and stably obtained.

In a third aspect of the present disclosure, for example, the electrochemical apparatus according to the first or second aspect may further include an evaporator that generates the water vapor to be supplied to the first stack from water in a liquid phase. According to the third aspect, water vapor necessary for steam electrolysis can be stably supplied to the first stack.

In a fourth aspect of the present disclosure, for example, in the electrochemical apparatus according to the third aspect, the first stack, the second stack, and the evaporator may be covered with the heat insulation material. According to the fourth aspect, the energy for evaporating water can be provided by the heat existing inside the housing during the operation of the electrochemical apparatus.

In a fifth aspect of the present disclosure, for example, the electrochemical apparatus according to any one of the first to fourth aspects may further include a power source that supplies electric power to the first stack and the second stack. According to the fifth aspect, it is possible to certainly supply electric energy required by the first stack and the second stack. Accordingly, according to the fifth aspect, high concentration hydrogen can be efficiently generated.

In a sixth aspect of the present disclosure, for example, the electrochemical apparatus according to any one of the first to fourth aspects may further include a first power source that supplies electric power to the first stack and a second power source that supplies electric power to the second stack. According to the sixth aspect, the first power source and the second power source can be individually controlled.

In a seventh aspect of the present disclosure, for example, in the electrochemical apparatus according to any one of the first to sixth aspect, the proton conductor may include at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ}. M1, M2, and M3 may each include at least one selected from the group consisting of Pr, Nd, Pm, Sm, Eu, Gd, Tb, Dy, Ho, Er, Tm, Yb, Y, Sc, In, and Lu; and x1 is a value of satisfying 0 < x1 < 1, x2 is a value of satisfying 0 < x2 < 1, x3 is a value of satisfying 0 < x3 < 1, y3 is a value of satisfying 0 < y3 < 1, and δ is a value of satisfying 0 < δ < 0.5. These proton conductors have high proton conductivity.

In an eighth aspect of the present disclosure, for example, in the electrochemical apparatus according to the seventh aspect, the proton conductor may be made of BaZr₁₋ₓ₁M1ₓ₁O_{3-δ}. BaZr₁₋ₓ₁Ybₓ₁O_{3-δ} has high proton conductivity.

A hydrogen generation method according to a ninth aspect of the present disclosure includes:
generating hydrogen and oxygen by decomposing water vapor using a first stack including an oxide ion conductor as an electrolyte; and
separating the hydrogen from a gas mixture of the hydrogen generated in the first stack and the water vapor that has not been decomposed in the first stack using a second stack including a proton conductor as an electrolyte.

According to the ninth aspect, high concentration hydrogen can be efficiently generated.

An electrochemical apparatus according to a 10th aspect of the present disclosure includes:
a first stack that includes an oxide ion conductor as an electrolyte;
a second stack that includes a proton conductor as an electrolyte; and
a heat insulation material that covers the first stack and the second stack, wherein
a power generation reaction is performed in the first stack using oxygen and hydrogen passed through the second stack.

According to the 10th aspect, it is possible to supply electric energy to the outside.

An electrochemical apparatus according to an 11th aspect of the present disclosure includes:
a first stack that includes an oxide ion conductor as an electrolyte;
a second stack that includes a proton conductor as an electrolyte;
a heat insulation material that covers the first stack and the second stack; and
a hydrogen supply path that introduces a gas containing hydrogen to the first stack, wherein
a power generation reaction is performed in the first stack using oxygen and hydrogen supplied from the hydrogen supply path.

According to the 11th aspect, electric energy can be supplied to the outside without going through the second stack.

Embodiments of the present disclosure will now be described with reference to the drawings. The present disclosure is not limited to the following embodiments.

### (First Embodiment)

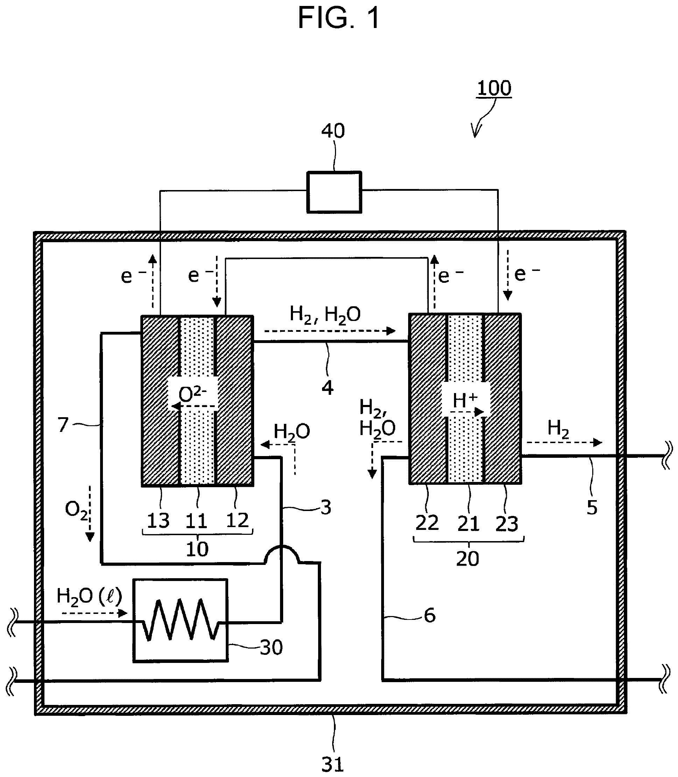

Fig. 1 shows a configuration of an electrochemical apparatus 100 according to a First Embodiment of the present disclosure. The electrochemical apparatus 100 includes a first stack 10 and a second stack 20. The first stack 10 includes one or a plurality of first cells. The first stack 10 typically includes a plurality of laminated first cells. The first cell is composed of a first electrolyte layer 11, a first electrode 12, and a second electrode 13. The first electrolyte layer 11 is disposed between the first electrode 12 and the second electrode 13. The second stack 20 includes one or a plurality of second cells. The second stack 20 typically includes a plurality of laminated second cells. The second cell is composed of a second electrolyte layer 21, a third electrode 22, and a fourth electrode 23. The second electrolyte layer 21 is disposed between the third electrode 22 and the fourth electrode 23. In Fig. 1, the first stack 10 and the second stack 20 are each represented by a single cell for convenience.

The first electrolyte layer 11 includes an oxide ion conductor as an electrolyte. The second electrolyte layer 21 includes a proton conductor as an electrolyte.

The electrochemical apparatus 100 further includes a housing 31 having heat insulating properties. The housing 31 is made of a heat insulation material. The first stack 10 and the second stack 20 are housed in the housing 31. In other words, the first stack 10 and the second stack 20 are covered with a heat insulation material. The housing 31 controls release of heat energy to the outside during the operation of the electrochemical apparatus 100. In Fig. 1, a single housing 31 covers the first stack 10 and the second stack 20. However, the present embodiment is not limited thereto. For example, two housings may cover the first stack 10 and the second stack 20, respectively.

The type of the heat insulation material is not particularly limited, and a general-purpose material having heat insulating properties can be used. Examples of the heat insulation material include glass wool, super wool, rock wool, ceramic fiber, mineral wool, calcium silicate, and hard urethane foam. As the heat insulation material, a special heat resistant heat insulation material containing fumed silica as a main component and containing an inorganic fibrous material and an infrared-shielding material may be used. The heat insulation material may be a vacuum heat insulation material. The vacuum heat insulation material is composed of a jacket material and a core material, and the inside thereof is depressurized and sealed. The jacket material is, for example, a metal laminate film obtained by laminating metal foil and a resin film. The core material is, for example, a porous structure material, such as glass wool. One or two or more materials selected from the above-mentioned materials are disposed in the periphery of the first stack 10 and the second stack 20. The housing 31 having heat insulating properties can be constituted by covering the first stack 10 and the second stack 20 with a supporting material, such as a metal plate, for fixing and accommodating the heat insulation material, as needed.

The first stack 10 decomposes water vapor to generate hydrogen and oxygen. This process is high-temperature steam electrolysis using an SOEC. The gas mixture of hydrogen generated in the first stack 10 and the water vapor which has not been decomposed in the first stack 10 is transported from the first stack 10 to the second stack 20. The second stack 20 selectively separates hydrogen from the gas mixture by the action of the proton conductor. Incidentally, hole conduction generally occurs in a proton conductor under a high oxygen partial pressure. However, as shown in Fig. 1, the second stack 20 can be prevented from being exposed to a high oxygen partial pressure by supplying the gas mixture generated in the first stack 10 to the second stack 20 having a proton conductor. As a result, the hole conduction in the second stack 20 is reduced. Accordingly, energy loss (for example, loss in hydrogen separation loss and loss due to leakage current) in the second stack 20 is reduced compared to a configuration in which the proton conductor is exposed to a high oxygen partial pressure. Consequently, high concentration hydrogen can be obtained.

Since the operating temperature of the proton conductor is also high, both the first stack 10 and the second stack 20 can be operated at a high temperature that is maintained by covering with a heat insulation material. When the first stack 10 and the second stack 20 are covered with a heat insulation material, heat energy necessary for high-temperature steam electrolysis is easily supplied to the first stack 10. In addition, heat is generated in the process of conduction of protons in the second stack 20. According to the present embodiment, the heat generated in the second stack 20 can be used as part of the heat energy necessary for steam electrolysis in the first stack 10. As a result, it is possible to reduce the energy loss. In other words, the energy efficiency during the operation of the electrochemical apparatus 100 is improved.

A heating device for raising the internal temperature of the housing 31 may be disposed in the inside of the housing 31. Examples of the heating device include a burner, a resistance heater, and an infrared heater.

In the present specification, "hydrogen" and "oxygen" mean "hydrogen gas" and "oxygen gas", respectively, unless otherwise noted.

The electrochemical apparatus 100 is operated as a hydrogen generation system and may also be operated as a fuel cell system as described below. The hydrogen generation system is a system for generating hydrogen. The fuel cell system is a system for generating electric power.

In the first stack 10, examples of the oxide ion conductor that is used in the first electrolyte layer 11 include stabilized zirconia, lanthanum gallate-based oxides, and ceria-based oxides. The first electrolyte layer 11 may be a dense body.

The first electrode 12 includes a catalyst for advancing the electrochemical oxidation reaction of water vapor. As the catalyst, a metal, such as Ni, can be used. The first electrode 12 may be made of a cermet. The cermet is a mixture of a metal and a ceramic material. Examples of the cermet include Ni-YSZ and a mixture of Ni and a ceria-based oxide. When the first electrode 12 is made of a cermet, an effect of increasing the reaction active sites for oxidizing water vapor can be expected. The first electrode 12 may be a porous body in order to promote the diffusion of water vapor.

The second electrode 13 includes a catalyst for advancing the electrochemical oxidation reaction of oxide ions. Examples of the catalyst include an oxide containing at least one selected from the group consisting of Mn, Fe, Co, and Ni. Specifically, examples of the catalyst include a lanthanum strontium cobalt iron composite oxide (LSCF), a lanthanum strontium cobalt composite oxide (LSC), a lanthanum strontium iron composite oxide (LSF), a lanthanum strontium manganese composite oxide (LSM), a barium strontium cobalt iron composite oxide (BSCF), a samarium strontium cobalt composite oxide (SSC), a lanthanum nickel iron composite oxide, a lanthanum nickel composite oxide, and a barium gadolinium lanthanum cobalt composite oxide. The catalyst may be a composite of an oxide containing at least one selected from the group consisting of Mn, Fe, Co, and Ni and another oxide or metal. The second electrode 13 may be a porous body in order to promote the diffusion of the generated oxygen.

In the second stack 20, examples of the proton conductor used in the second electrolyte layer 21 include a proton conductive oxide. Specifically, the second electrolyte layer 21 can include at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ} as a proton conductor. M1, M2, and M3 can each include at least one selected from the group consisting of Pr, Nd, Pm, Sm, Eu, Gd, Tb, Dy, Ho, Er, Tm, Yb, Y, Sc, In, and Lu; and x1 is a value of satisfying 0 < x1 < 1, x2 is a value of satisfying 0 < x2 < 1, x3 is a value of satisfying 0 < x3 < 1, y3 is a value of satisfying 0 < y3 < 1, and δ is a value of satisfying 0 < δ < 0.5. These proton conductors have high proton conductivity. The electrochemical performance of the second stack 20 can be improved by using a solid electrolyte having high proton conductivity. The proton conductor may be made of BaZr₁₋ₓ₁Ybₓ₁O_{3-δ}. BaZr₁₋ₓ₁Ybₓ₁O_{3-δ} has high proton conductivity. The variable δ is a value for expressing the amount of oxygen defects in the crystal lattice of the oxide on the composition. The value of δ changes depending on the x1, x2, x3, and y3, temperature, oxygen partial pressure, water vapor partial pressure, etc. The second electrolyte layer 21 may be a dense body.

The third electrode 22 includes a catalyst for electrochemically oxidizing hydrogen. As the catalyst, a metal, such as Ni, can be used. The third electrode 22 may be made of a cermet. Examples of the cermet include a mixture of Ni and a proton conductive oxide, such as a mixture of Ni and BaZr₁₋ₓ₁Ybₓ₁O_{3-δ}. When the third electrode 22 is made of a cermet, an effect of increasing the reaction active sites for oxidizing hydrogen can be expected. The third electrode 22 may be a porous body in order to promote the diffusion of hydrogen and water vapor.

The fourth electrode 23 includes a catalyst for electrochemically reducing protons. As the catalyst, a metal, such as Ni, can be used. The fourth electrode 23 may be made of a cermet. Examples of the cermet include a mixture of Ni and a proton conductive oxide, such as a mixture of Ni and BaZr₁₋ₓ₁Ybₓ₁O_{3-δ}. When the fourth electrode 23 is made of a cermet, an effect of increasing the reaction active sites for reducing protons can be expected. The fourth electrode 23 may be a porous body in order to promote the diffusion of hydrogen.

The term "dense body" means a material having, for example, a relative density of 85% or more. The relative density can be measured by an Archimedes method or a mercury intrusion method. The term "porous body" means a material having, for example, a void percentage of 20% or more. The void percentage can be measured by an Archimedes method or a mercury intrusion method.

The electrochemical apparatus 100 includes a first path 3, a second path 4, and a third path 5. The first path 3 is a path for introducing water vapor to the first stack 10 and is connected to the first stack 10. For details, the first path 3 extends from the outside of the housing 31 to the inside of the housing 31 and is connected to the first electrode 12 of the first stack 10. The starting end of the first path 3 is connected to, for example, a water source in the outside. The second path 4 is a path for introducing a gas mixture from the first stack 10 to the second stack 20 and connects between the first stack 10 and the second stack 20. For details, the second path 4 connects between the first electrode 12 of the first stack 10 and the third electrode 22 of the second stack 20. The third path 5 is a path in which hydrogen separated in the second stack 20 flows and is connected to the second stack 20. For details, the third path 5 is connected to the fourth electrode 23 of the second stack 20. The third path 5 extends from the inside of the housing 31 to the outside of the housing 31 and is connected to, for example, a hydrogen storage facility.

Water vapor necessary for steam electrolysis is supplied to the first stack 10 through the first path 3. A gas mixture is supplied to the second stack 20 from the first stack through the second path 4. The separated hydrogen is supplied to the outside of the electrochemical apparatus 100 through the third path 5. According to the configuration of the present embodiment, these series of steps can appropriately proceed, and high concentration hydrogen can be continuously and stably obtained.

The electrochemical apparatus 100 further includes a fourth path 6 and a fifth path 7. The fourth path 6 is a path in which the gas mixture discharged from the second stack 20 flows and is connected to the second stack 20. For details, the fourth path 6 is connected to the third electrode 22 of the second stack 20. The fourth path 6 extends from the inside of the housing 31 to the outside of the housing 31. The fifth path 7 is a path in which oxygen generated in the first stack 10 flows and is connected to the first stack 10. For details, the fifth path 7 is connected to the second electrode 13 of the first stack 10. The fifth path 7 extends from the inside of the housing 31 to the outside of the housing 31 and is connected to, for example, an oxygen storage facility.

Each path is constituted by a pipe having heat resistance, such as a metal pipe.

The electrochemical apparatus 100 further includes an evaporator 30. The evaporator 30 generates water vapor to be supplied to the first stack 10 from water in a liquid phase (in Fig. 1, shown as H₂O (I)). In the present embodiment, the evaporator 30 is disposed in the first path 3. According to the evaporator 30, water vapor can be generated using water in a liquid phase as a raw material, and water vapor necessary for steam electrolysis can be stably supplied to the first stack 10.

In the present embodiment, the evaporator 30 is housed, together with the first stack 10 and the second stack 20, in the housing 31. In other words, the first stack 10, the second stack 20, and the evaporator 30 are covered with a heat insulation material. According to such a configuration, the energy for evaporating water can be provided by the heat existing inside the housing 31 during the operation of the electrochemical apparatus 100. Accordingly, the energy efficiency during the operation of the electrochemical apparatus 100 is improved.

As the evaporator 30, a known heat exchanger, such as a fin tube heat exchanger, a plate type heat exchanger, or a shell and tube heat exchanger, can be used. In order to evaporate water in a liquid phase, a high-temperature heating medium is used. The high-temperature heating medium may a gas, such as hot air, existing inside the housing 31. Alternatively, the high-temperature heating medium may be a liquid, such as oil, heated by the high-temperature air existing inside the housing 31. The high-temperature heating medium may be supplied to the evaporator 30 from the outside of the electrochemical apparatus 100.

The evaporator 30 may be disposed in the outside of the housing 31. The evaporator 30 may be omitted, and water vapor generated in the outside of the electrochemical apparatus 100 may be directly introduced into the first path 3. For example, when a high-temperature heat source is separately present, the evaporator 30 can be configured such that water vapor is generated at the outside of the housing 31 using the high-temperature heat source. Alternatively, when the water vapor itself is present in surplus, the evaporator 30 may be omitted, and water vapor may be directly introduced into the first path 3.

The electrochemical apparatus 100 further includes a power source 40. The power source 40 supplies electric power to the first stack 10 and the second stack 20. In the present embodiment, the power source 40 is commonly used by the first stack 10 and the second stack 20. The power source 40 is connected to the second electrode 13 of the first stack 10 and the fourth electrode 23 of the second stack 20. The first electrode 12 of the first stack 10 and the third electrode 22 of the second stack 20 are electrically connected to each other. That is, the first stack 10 and the second stack 20 are connected in series. According to the power source 40, the electric energy required by the first stack 10 and the second stack 20 can be certainly supplied, and consequently, high concentration hydrogen can be efficiently generated. The common use of the power source 40 by the first stack 10 and the second stack 20 contributes to cost reduction.

Subsequently, the operation of the electrochemical apparatus 100 will be described in detail. In the electrochemical apparatus 100, a step of generating hydrogen and oxygen by decomposition of water vapor and a step of separating hydrogen from a gas mixture of hydrogen and water vapor simultaneously proceed. The step of generating hydrogen and oxygen is performed using the first stack 10 that includes an oxide ion conductor as an electrolyte. The step of separating hydrogen from a gas mixture is performed using the second stack 20 that includes a proton conductor as an electrolyte. The gas mixture includes the hydrogen generated in the first stack 10 and the water vapor which has not been decomposed in the first stack 10. High concentration hydrogen can be efficiently generated by carrying out these steps.

Water in a liquid phase introduced into the first path 3 is evaporated by the evaporator 30 disposed in the first path 3. Consequently, water vapor is generated. The water vapor reaches first electrode 12 of the first stack 10 through the first path 3. Electrons are supplied to the first electrode 12 of the first stack 10 by switching the power source 40 to ON. In the first electrode 12, the reduction reaction of water vapor occurs to generate hydrogen and an oxide ion. Hydrogen and unreacted water vapor are discharged from the first stack 10 and are supplied to the second stack 20 through the second path 4. The oxide ions conduct through the first electrolyte layer 11 and reach the second electrode 13. In the second electrode 13, the oxidation reaction of oxide ions occurs to generate oxygen. Oxygen is discharged from the second electrode 13 and is introduced to the outside of the electrochemical apparatus 100 through the fifth path 7.

A gas mixture of hydrogen and water vapor is supplied to the third electrode 22 of the second stack 20 from the first electrode 12 of the first stack 10 through the second path 4. In the third electrode 22, the oxidation reaction of hydrogen occurs to generate protons. The protons conduct through the second electrolyte layer 21 and reach the fourth electrode 23. In the fourth electrode 23, the reduction reaction of protons occurs to generate hydrogen. Water molecules hardly conduct through the second electrolyte layer 21, and only protons conduct through the second electrolyte layer 21. Accordingly, high concentration hydrogen can be obtained. Hydrogen is introduced to the outside of the electrochemical apparatus 100 through the third path 5. Hydrogen is, for example, stored in a hydrogen storage facility. Unreacted hydrogen and unreacted water vapor are discharged from the second stack 20 and are introduced to the outside of the electrochemical apparatus 100 through the fourth path 6. Hydrogen may be burned by a burner or catalytic combustion. The combustion heat can be used for maintaining the internal temperature of the housing 31 to a temperature suitable for each reaction.

The reaction at each electrode is as follows:
First electrode 12: 2H₂O + 4e- → 2H₂ + 2O²⁻;
Second electrode 13: 2O²⁻ → O₂ + 4e-;
Third electrode 22: H₂ → 2H⁺ + 2e⁻, and
Fourth electrode 23: 2H⁺ + 2e⁻ → H₂.

The gas flowing through each path may contain another component as long as the reaction at each electrode is not significantly inhibited. For example, when Ni is used in the first electrode 12, in order to suppress the oxidation of Ni, water vapor may be mixed with hydrogen and may be supplied to the first path 3.

During the operation of the electrochemical apparatus 100, the temperature in the peripheries of the first stack 10 and the second stack 20 is maintained at, for example, 500°C or more and 1000°C or less. Since the first stack 10 and the second stack 20 are housed in the housing 31, the first stack 10 and the second stack 20 can be operated at a temperature suitable for the reaction. Heat dissipation loss can also be reduced by the housing 31.

The series of hydrogen separation reactions at the second stack 20 are exothermal reactions. On the other hand, the series of steam electrolysis reactions at the first stack 10 are endothermal reactions. Heat can be efficiently used by trapping the heat generated at the second stack 20 inside the housing 31 and using the heat for the endothermal reactions in the first stack 10. As a result, the energy loss can be further reduced. As the means for using the heat generated at the second stack 20 for the endothermal reaction at the first stack 10, various heat exchange means can be used. Examples thereof include a heat exchanger in which pipes constituting a plurality of paths are in contact with each other such that fluids flowing in the pipes exchange heat with each other. The heat generated in the second stack 20 can be used for the endothermal reaction at the first stack 10 only by housing the first stack 10 and the second stack 20 in a single housing 31.

In the present embodiment, the evaporator 30 is housed in the housing 31. In this case, the heat existing inside the housing 31 during the operation of the first stack 10 and the second stack 20 can be used for evaporation of water at the evaporator 30. For example, the heat energy of the gas flowing in the third path 5, the fourth path 6, or the fifth path 7 is recovered by heat exchange and is supplied to the evaporator 30. By doing so, the heat energy that is released to the outside of the electrochemical apparatus 100 can be reduced. Accordingly, the energy efficiency during the operation of the electrochemical apparatus 100 can be improved.

Other some embodiments will now be described. Elements common to the First Embodiment and another embodiment may be designated by the same reference sings, and the description thereof may be omitted. The description for each embodiment can be applied to each other as long as they are not technically inconsistent. The embodiments may be combined with each other as long as they are not technically inconsistent.

### (Second Embodiment)

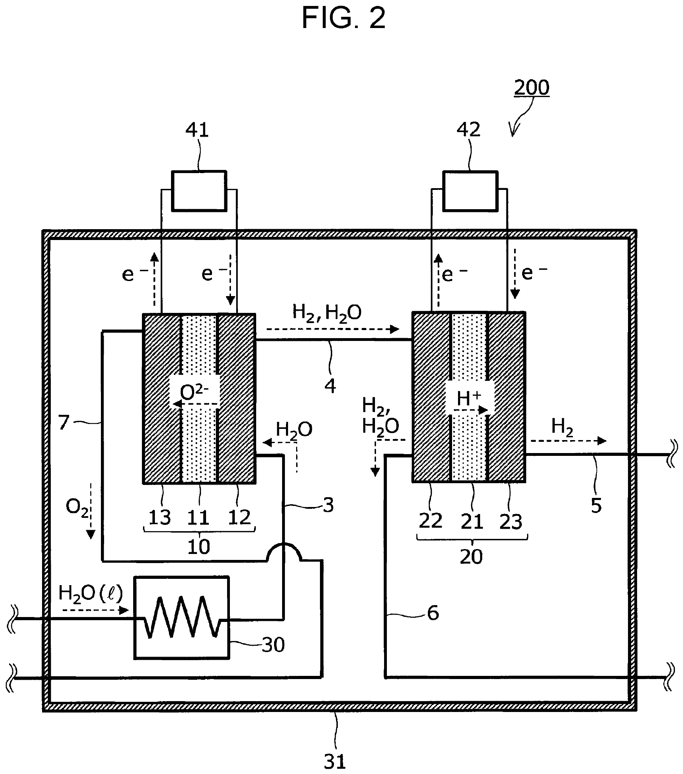

Fig. 2 shows the configuration of an electrochemical apparatus 200 according to a Second Embodiment of the present disclosure. The electrochemical apparatus 200 includes a first power source 41 and a second power source 42 instead of the power source 40. The first power source 41 supplies electric power to the first stack 10. The first power source 41 is connected to the first electrode 12 and the second electrode 13 of the first stack 10. The second power source 42 supplies electric power to the second stack 20. The second power source 42 is connected to the third electrode 22 and the fourth electrode 23 of the second stack 20.

According to the power source 40 described above, the first stack 10 and the second stack 20 are connected in series. Accordingly, the values of currents flowing in the first stack 10 and the second stack 20 are the same. However, the current value suitable for the steam electrolysis reaction in the first stack 10 may be different from the current value suitable for electrochemical hydrogen separation in the second stack 20. According to the present embodiment, the first power source 41 and the second power source 42 can be controlled individually. In this case, since it is possible to supply electric power amounts that are suitable for the first stack 10 and the second stack 20, respectively, the electrochemical apparatus 200 has excellent controllability.

### (Third Embodiment)

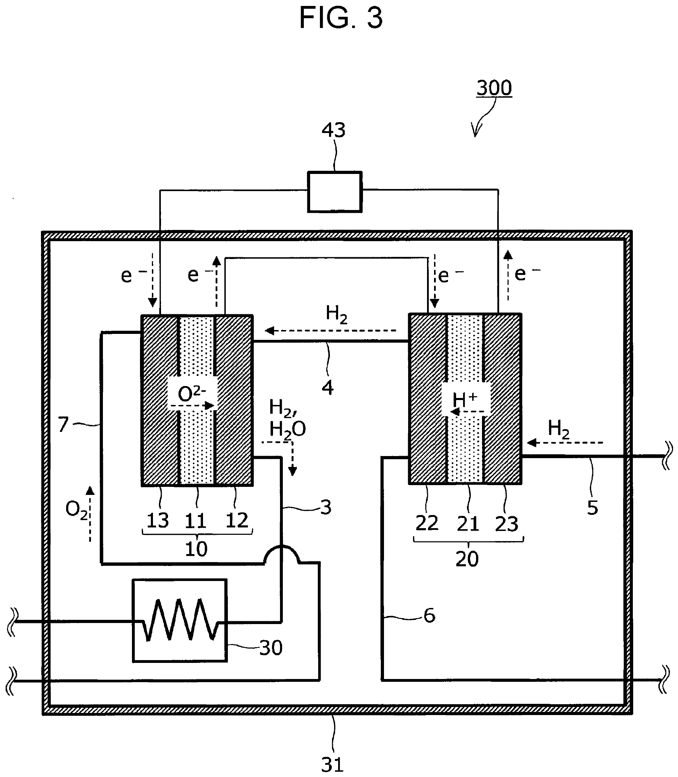

Fig. 3 shows a configuration of an electrochemical apparatus 300 according to a Third Embodiment of the present disclosure. The electrochemical apparatus 300 has the same configuration as that of the electrochemical apparatus 100 described with reference to Fig. 1 except that the power source 40 is replaced with an external load 43. The configurations of the first stack 10 and the second stack 20 are as described in the First Embodiment.

The reaction that proceeds at each electrode of the electrochemical apparatus 300 is a reverse reaction of the reaction that proceeds at each electrode of the electrochemical apparatus 100 of the First Embodiment. In the present embodiment, the power generation reaction is performed in the first stack 10 using oxygen supplied from the outside and hydrogen passed through the second stack 20. According to the present embodiment, electric energy can be supplied to the outside. In this point, the present embodiment differs from the First Embodiment.

The operation of the electrochemical apparatus 300 will be described in detail.

The operating temperature of the first stack 10 and the second stack 20 is for example, 500°C or more and 1000°C or less. This is common to the present embodiment and the First Embodiment.

Hydrogen introduced into the third path 5 flows in the fourth electrode 23 of the second stack 20. In the fourth electrode 23, the oxidation reaction of hydrogen occurs to generate protons. The protons conduct through the second electrolyte layer 21 and reach the third electrode 22. In the third electrode 22, the reduction reaction of protons occurs to generate hydrogen. The hydrogen is discharged from the second stack 20 and is supplied to the first stack 10 through the second path 4.

Hydrogen is supplied to the first electrode 12 of the first stack 10 from the third electrode 22 of the second stack 20 through the second path 4. A gas containing oxygen is supplied to the second electrode 13 through the fifth path 7. A typical example of the gas containing oxygen is air. In the second electrode 13, the reduction reaction of oxygen occurs to generate oxide ions. The oxide ions conduct through the first electrolyte layer 11 and reach the first electrode 12. In the first electrode 12, an electrochemical reaction that generates water vapor and electrons from oxide ions and hydrogen proceeds. Water vapor and unreacted hydrogen are discharged from the first stack 10 and are introduced to the outside of the electrochemical apparatus 300 through the first path 3. Hydrogen may be burned by a burner or catalytic combustion.

The reaction at each electrode is as follows:
First electrode 12: 2H₂ + 2O²⁻ → 2H₂O + 4e-;
Second electrode 13: O₂ + 4e- → 2O²⁻;
Third electrode 22: 2H⁺ + 2e⁻ → H₂; and
Fourth electrode 23: H₂ → 2H⁺ + 2e⁻.

According to the present embodiment, even if the gas to be introduced into the third path 5 contains not only hydrogen but also water vapor and impurities such as carbon dioxide, pure hydrogen is generated in the second stack 20 and can be supplied to the first stack 10. As a result, it is possible to obtain effects, such as an improvement in power generation performance and suppression of carbon precipitation, in the first stack 10. The gas to be introduced into the third path 5 may be, for example, a hydrogen-containing gas obtained by reforming a raw material gas, such as methane, or a hydrogen-containing gas obtained by steam electrolysis.

The reaction that proceeds at the first stack 10 is an electrochemical reaction that generates water vapor and electric energy from hydrogen and oxygen (i.e., fuel cell reaction). The electric energy can be supplied to the external load 43 connected to the first stack 10. The electric energy is partially used as energy for proton conduction in the second stack 20. The electrochemical apparatus 300 functions as a fuel cell system and generates electric energy.

The gas flowing through each path may contain another component as long as the reaction at each electrode is not significantly inhibited. For example, when Ni is used in the third electrode 22, in order to suppress the oxidation of Ni, hydrogen may be introduced into the fourth path 6 at a minute flow rate. Water vapor may be introduced into the third path 5 or the fourth path 6 at a minute flow rate in order to increase the proton conductivity of the second electrolyte layer 21.

### (Fourth Embodiment)

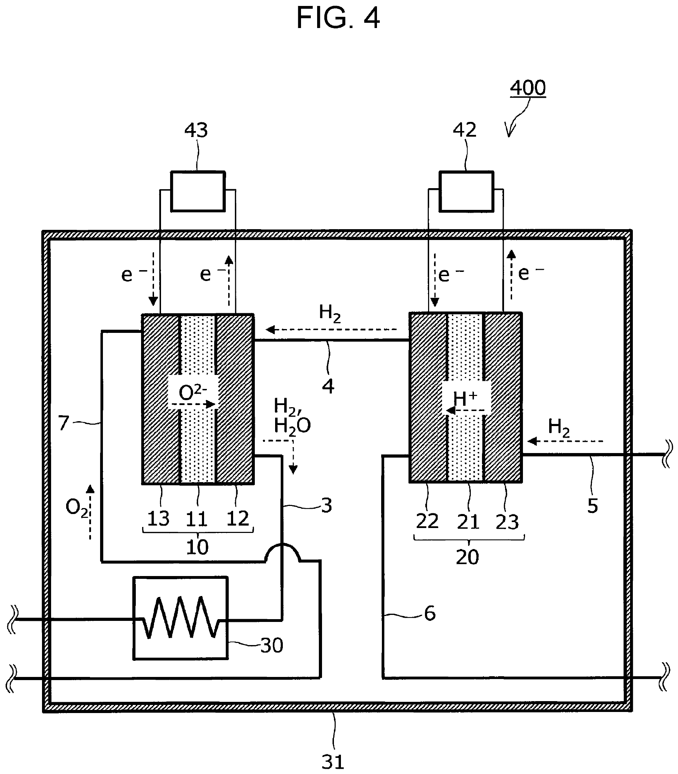

Fig. 4 shows a configuration of an electrochemical apparatus 400 according to a Fourth Embodiment of the present disclosure. In the electrochemical apparatus 400, an external load 43 is connected to the first stack 10 only. To the second stack 20, a second power source 42 is connected. The electric energy generated in the first stack 10 is supplied to the external load 43. The conduction of protons in the second stack 20 is proceeded by using the electric energy supplied from the second power source 42. Since the electric energy that is generated in the first stack 10 and the electric energy that is consumed in the second stack 20 can be controlled individually, the electrochemical apparatus 400 has excellent controllability.

### (Fifth Embodiment)

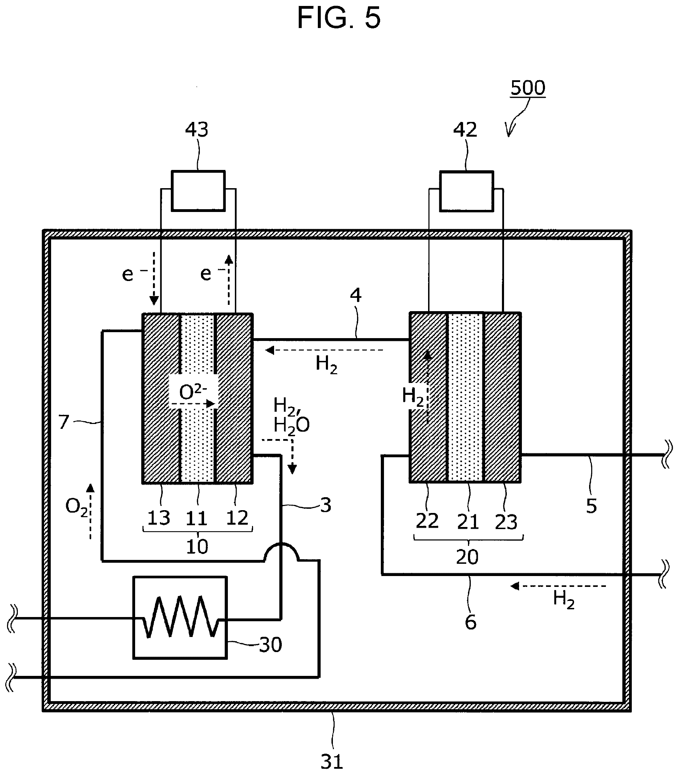

Fig. 5 shows a configuration of an electrochemical apparatus 500 according to a Fifth Embodiment of the present disclosure. In the electrochemical apparatus 500, an external load 43 is connected to the first stack 10 only. A second power source 42 is connected to the second stack 20, and the fourth path 6 is connected to the third electrode 22 of the second stack 20.

A gas containing hydrogen is supplied to the third electrode 22 through the fourth path 6. In this point, the electrochemical apparatus 500 differs from the electrochemical apparatus 400 of the Fourth Embodiment. The gas containing hydrogen passes through the third electrode 22 and is then supplied to the first stack 10 through the second path 4. On this occasion, an electrochemical reaction does not proceed at the second stack 20, and the power source 42 also is not operated. The following reactions proceed respectively at the first electrode 12 and the second electrode 13 of the first stack 10.

First electrode 12: 2H₂ + 2O²⁻ → 2H₂O + 4e⁻
Second electrode 13: O₂ + 4e⁻ → 2O²⁻

These reactions are a fuel cell reaction. These reactions can generate electric energy. The generated electric energy is supplied to the external load 43.

According to the present embodiment, the electrochemical reaction at the second stack 20, i.e., conduction of protons, does not proceed, unlike the electrochemical apparatus 400 according to the Fourth Embodiment. Accordingly, electric energy for conducting protons in the second stack 20 is unnecessary, and an improvement in the efficiency of the electrochemical apparatus 500 can be expected.

### (Sixth Embodiment)

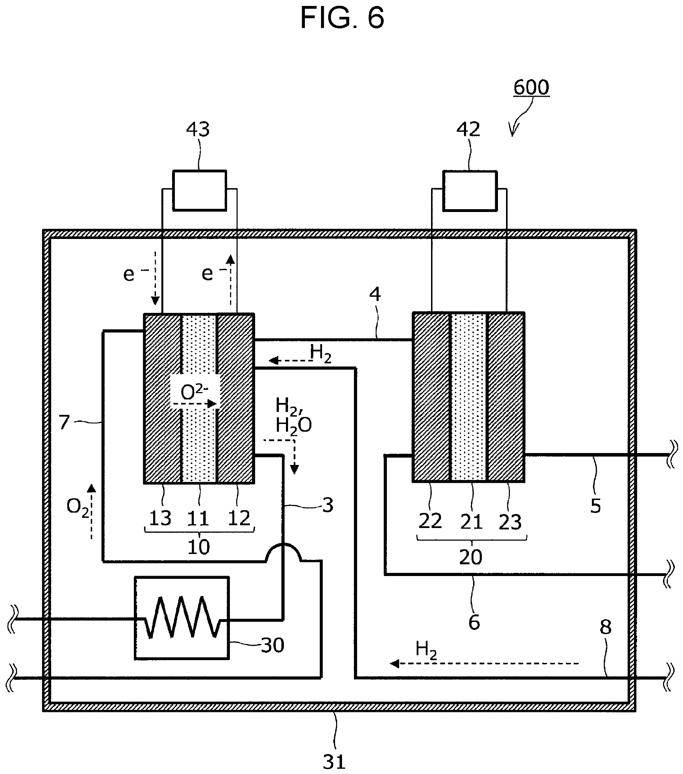

Fig. 6 shows a configuration of an electrochemical apparatus 600 according to a Sixth Embodiment of the present disclosure. In the electrochemical apparatus 600, an external load 43 is connected to the first stack 10 only. To the second stack 20, a second power source 42 is connected. The electrochemical apparatus 600 includes a sixth path 8. The sixth path 8 is a hydrogen supply path for supplying a gas containing hydrogen to the first stack 10. In the present embodiment, the sixth path 8 is connected to the first stack 10. For details, the sixth path 8 is connected to the first electrode 12 of the first stack 10. The sixth path 8 extends from the inside of the housing 31 to the outside of the housing 31 and is connected to, for example, a hydrogen storage facility.

The sixth path 8 may be directly connected to the first electrode 12 of the first stack 10 or may be connected to the second path 4. When the sixth path 8 is connected to the second path 4, the gas containing hydrogen is supplied to the first electrode 12 of the first stack 10 through the sixth path 8 and the second path 4.

The following reactions proceed respectively at the first electrode 12 and the second electrode 13 of the first stack 10.

First electrode 12: 2H₂ + 2O²⁻ → 2H₂O + 4e⁻
Second electrode 13: O₂ + 4e⁻ → 2O²⁻

These reactions are a fuel cell reaction. These reactions can generate electric energy. The generated electric energy is supplied to the external load 43. On this occasion, an electrochemical reaction does not proceed at the second stack 20, and the power source 42 also is not operated.

According to the present embodiment, the electrochemical reaction at the second stack 20, i.e., conduction of protons, does not proceed, unlike the electrochemical apparatus 400 according to the Fourth Embodiment. Accordingly, electric energy for conducting protons in the second stack 20 is unnecessary, and an improvement in the efficiency of the electrochemical apparatus 600 can be expected.

### Industrial Applicability

The electrochemical apparatus according to the present disclosure can be used as a hydrogen generating apparatus or a fuel cell system.

### Reference Signs List

- 3: first path
- 4: second path
- 5: third path
- 6: fourth path
- 7: fifth path
- 8: sixth path
- 10: first stack
- 11: first electrolyte layer
- 12: first electrode
- 13: second electrode
- 20: second stack
- 21: second electrolyte layer
- 22: third electrode
- 23: fourth electrode
- 30: evaporator
- 31: housing (heat insulation material)
- 40: power source
- 41: first power source
- 42: second power source
- 43: external load
- 100,: 200, 300, 400, 500, 600 electrochemical apparatus

## Claims

1. An electrochemical apparatus comprising:
a first stack that includes an oxide ion conductor as an electrolyte and decomposes water vapor to generate hydrogen and oxygen;
a second stack that includes a proton conductor as an electrolyte and separates the hydrogen generated in the first stack from a gas mixture of the hydrogen and the water vapor that has not been decomposed in the first stack; and
a heat insulation material that covers the first stack and the second stack.

2. The electrochemical apparatus according to Claim 1, further comprising:
a first path that is connected to the first stack and introduces the water vapor to the first stack;
a second path that connects between the first stack and the second stack and introduces the gas mixture from the first stack to the second stack; and
a third path in which the hydrogen separated in the second stack flows.

3. The electrochemical apparatus according to Claim 1 or 2, further comprising:
an evaporator that generates the water vapor to be supplied to the first stack from water in a liquid phase.

4. The electrochemical apparatus according to Claim 3, wherein
the heat insulation material covers the first stack, the second stack, and the evaporator.

5. The electrochemical apparatus according to any one of Claims 1 to 4, further comprising:
a power source that supplies electric power to the first stack and the second stack.

6. The electrochemical apparatus according to any one of Claims 1 to 4, further comprising:
a first power source that supplies electric power to the first stack; and
a second power source that supplies electric power to the second stack.

7. The electrochemical apparatus according to any one of Claims 1 to 6, wherein
the proton conductor includes at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ}, where
M1, M2, and M3 each include at least one selected from the group consisting of Pr, Nd, Pm, Sm, Eu, Gd, Tb, Dy, Ho, Er, Tm, Yb, Y, Sc, In, and Lu;
x1 is a value of satisfying 0 < x1 < 1;
x2 is a value of satisfying 0 < x2 < 1;
x3 is a value of satisfying 0 < x3 < 1;
y3 is a value of satisfying 0 < y3 < 1; and
δ is a value of satisfying 0 < δ < 0.5.

8. The electrochemical apparatus according to Claim 7, wherein the proton conductor is made of BaZr₁₋ₓ₁M1ₓ₁O_{3-δ}.

9. A hydrogen generation method comprising:
generating hydrogen and oxygen by decomposing water vapor using a first stack that includes an oxide ion conductor as an electrolyte; and
separating the hydrogen from a gas mixture of the hydrogen generated in the first stack and the water vapor that has not been decomposed in the first stack using a second stack that includes a proton conductor as an electrolyte.

10. An electrochemical apparatus comprising:
a first stack that includes an oxide ion conductor as an electrolyte;
a second stack that includes a proton conductor as an electrolyte; and
a heat insulation material that covers the first stack and the second stack,
wherein
a power generation reaction is performed in the first stack using oxygen and hydrogen passed through the second stack.
